(19) Europäisches Patentamt
European Patent Office
Office européen des brevets

(11) **EP 3 429 098 B1**

(12) **EUROPEAN PATENT SPECIFICATION**

(45) Date of publication and mention
of the grant of the patent:
**21.01.2026 Bulletin 2026/04**

(51) International Patent Classification (IPC):
**H04B 17/00** *(2015.01)* **H04B 17/10** *(2015.01)*
**H04Q 11/04** *(2006.01)* **G01R 19/00** *(2006.01)*

(21) Application number: **17181145.8**

(52) Cooperative Patent Classification (CPC):
**H04B 17/0085; H04B 17/102; H04B 17/103**

(22) Date of filing: **13.07.2017**

(54) **PROBE AND METHOD FOR TESTING FULL DUPLEX MULTI-LEVEL SIGNALS**

SONDE UND VERFAHREN ZUM TESTEN VON MEHRPEGEL VOLLDUPLEXSIGNALEN

SONDE ET PROCÉDÉ DE TEST DE SIGNAUX FULL DUPLEX À NIVEAUX MULTIPLES

(84) Designated Contracting States:
**AL AT BE BG CY CZ DE DK EE ES FI FR GB GR
HR HU IS IT LT LU LV MC MK MT NL NO PL PT RO
RS SE SI SK SM TR**

(43) Date of publication of application:
**16.01.2019 Bulletin 2019/03**

(73) Proprietor: **Rohde & Schwarz GmbH & Co. KG
81671 München (DE)**

(72) Inventors:
• **Schaefer, Andrew
82041 Oberhaching (DE)**
• **Zimmermann, Dirk
81737 München (DE)**

(74) Representative: **Novagraaf Group
Chemin de l'Echo 3
1213 Onex / Geneva (CH)**

(56) References cited:
**US-A- 5 504 736**

EP 3 429 098 B1

**Description**

The invention relates to a probe, a measurement system and a method for testing full duplex multi-level signals between a first transceiver and a second transceiver as well as a method for setting a probe.

In a full duplex transmission system comprising a first transceiver and a second transceiver, both transceivers (nodes) transmit and receive data simultaneously. Accordingly, a channel is established between both transceivers that comprise data transmitted in one direction and data transmitted in the other direction. For instance, such a transmission system is used in the automotive sector, in particular while being implemented by the BroadR-Reach technology being an Ethernet physical layer standard.

As signals are transmitted and received simultaneously, the signal on the channel may be a superposition of the signals transmitted by both transceivers. In the full duplex transmission system, each transceiver has exact knowledge of what it is sending such that the respective transceiver can easily remove this signal portion from the signal received in order to determine and decode the signal which is transmitted by the other transceiver.

However, in certain test and measurement applications, it is required to determine and decode the signal on the channel without knowledge of the individual transmitted signals of each transceiver, for instance measuring the channel in the middle of the cable provided between both transceivers. Nevertheless, it should be determined and decoded what each transceiver is currently transmitting over the channel. As a simple probing of the signal on the channel only reveals the sum of the transmitted signals, substantial computational power would be required in order to decode the signals appropriately. Even though high computational power is used, it is still not possible to reveal the transmitted signal of each transceiver correctly.

US 5 504 736 A describes a non-invasive link monitor that comprises a voltage probe and a current probe, which are used to probe voltage and current signals in a non-invasive manner, respectively.

Accordingly, there is a need for a simple and cost-efficient possibility to determine and decode the signals of respective transceivers in a full duplex transmission system such that the respective signals currently transmitted can be determined without knowledge of the individual transmitted signals.

The invention, according to claim 1, provides a probe for testing full duplex multi-level signals between a first transceiver and a second transceiver, comprising a first probe interface to be connected to the first transceiver, a second probe interface to be connected to the second transceiver, and a directional coupler unit having finite directivity. The directional coupler unit is configured to provide a first directional coupler signal indicative of a signal in forward direction as well as a second directional coupler signal indicative of a signal in reverse direction. The first directional coupler is a forward coupler and the second directional coupler is a backward coupler. The signal in forward direction corresponds to a signal transmitted by the first transceiver to the second transceiver. The signal in reverse direction corresponds to a signal transmitted by the second transceiver to the first transceiver. The multi-level signals transmitted between the first transceiver and the second transceiver are separated from each other by means of the directional coupler unit. The first directional coupler signal is provided at a first output interface and the second directional coupler signal is provided at a second output interface.

The invention is based on the finding that the multi-level signals transmitted, for instance 3-PAM signals, between the first transceiver and the second transceiver are separated from each other by using the directional coupler unit. Thus, the first directional coupler signal being indicative of the signal in forward direction and the second directional coupler signal indicative of the signal in reverse direction can be output. The signal in forward direction corresponds to the signal transmitted by the first transceiver to the second transceiver whereas the signal in reverse direction corresponds to the signal transmitted by the second transceiver to the first transceiver. The directional coupler unit may have a finite directivity, for instance a finite directivity in the order of 20 to 30 dB depending on the frequency (5 to 1,000 MHz).

The first and second output interfaces may be first and second oscilloscope interfaces such that the probe can be directly connected to an oscilloscope that receives the signals acquired by the probe in order to analyze these directional coupler signals.

The directional coupler unit comprises a first directional coupler and a second directional coupler which are connected with each other in series. Thus, two (conventional) directional couplers are used which are connected with each other in series in order to provide the first directional coupler signal and the second directional coupler signal respectively. The basic idea by using two directional couplers is that interfering signals are measured by each directional coupler which also occur in the other directional coupler. Thus, the occurring interferences can be removed easily resulting in an improved directivity. Accordingly, using two directional couplers together establish a new single directional coupler having a high directivity, in particular a higher directivity with respect to a single directional coupler. Therefore, a cost-efficient probe for testing full duplex multi-level signals is established as two (conventional) directional couplers are used in order to provide properties of a directional coupler having a high directivity which usually leads to very high costs.

The first directional coupler has a first coupled port establishing the first oscilloscope interface and the second directional coupler has a second coupled port establishing the second oscilloscope interface. Thus, the first directional coupler is used for providing the signal being indicative of the signal in forward direction whereas the second directional coupler is used for providing the signal being indicative of the signal in reversed direction. Accordingly, both directional couplers have their dedicated function.

According to the claimed invention, the first directional coupler is a forward coupler and the second directional coupler is a backward coupler. These types of directional couplers ensure that the first directional coupler signal as well as the second directional coupler signal can be measured that are used for determining and decoding the signal in forward direction as well as the signal in reverse direction.

According to another aspect, the probe is a differential probe. Thus, the probe can be used for acquiring differential signals. The common-mode rejection ratio (CMRR) is maximized appropriately.

Further, the invention provides a measurement system for testing full duplex multi-level signals between a first transceiver and a second transceiver, comprising a control and analyzing unit and a probe as mentioned above, wherein the control and analyzing unit is configured to determine the signal in forward direction and/or the signal in reverse direction. Therefore, the control and analyzing unit is connected to the output interfaces of the probe. The control and analyzing unit analyzes the respective directional coupler signals received via the output interfaces in order to determine and decode the signal in forward direction as well as the signal in reverse direction from the directional coupler signals received.

According to an aspect, the control and analyzing unit is configured to determine the first directional coupler signal and the second directional coupler signal outputted at the respective output interfaces wherein the control and analyzing unit is further configured to determine the signal in forward direction and/or the signal in reverse direction based upon the first and second directional coupler signals determined respectively. Thus, the first and second directional coupler signals are forwarded to the control and analyzing unit for analyzing purposes wherein these signals received, namely the first and second directional coupler signals, are processed appropriately in order to determine the signals in forward direction and reverse direction corresponding to the signals transmitted by the first and second transceiver respectively. Accordingly, the measurement system is enabled to determine and decode the signals transmitted by each transceiver while using the probe described above.

For instance, the signals in forward direction and reverse direction may be calculated appropriately by using the following equations putting the signals in forward direction and reverse direction in relation to the first and second directional coupler signals gathered easily by using the probe:

$$x_f(t) = x_{3L}(t) - \alpha x_{3R}(t),$$

and

$$x_r(t) = -\alpha x_{3L}(t) + x_{3R}(t),$$

wherein $x_f(t)$ and $x_r(t)$ are the signals in forward and reverse direction, wherein $x_{3L}(t)$ is the signal outputted by the first directional coupler and wherein $x_{3R}(t)$ is the signal outputted by the second directional coupler. The coefficient $\alpha$ describes the relative amplitudes of the forward and reverse paths for the directional coupler(s).

Moreover, the control and analyzing unit may be configured to apply a step or impulse signal to at least one of the probe interfaces. For instance, the signal is applied to the second probe interface in order to stimulate the probe appropriately. The step or impulse signal may be used for setting purposes or configuration.

Particularly, the control and analyzing unit is configured to measure the first directional coupler signal indicative of the signal in forward direction and/or the second directional coupler signal indicative of the signal in reverse direction. Depending on the probe interface used for the step or impulse signal, the control and analyzing unit measures a dedicated signal in the opposite direction.

Moreover, the control and analyzing unit may be configured to determine a response signal of the probe in the respective other direction. The other direction relates to the direction of the coupler signal. Accordingly, the response signal is measured in the other direction with respect to the coupler signal. In other words, the step or impulse signal is applied in the other direction than the direction of the signal to be measured.

Thus, if the step or impulse signal is applied to the second probe interface, the first directional coupler signal is measured and the response signal of the respective step or impulse signal is determined in the other direction than the coupler signal, namely the reverse direction. If the step or impulse signal is applied to the first probe interface, the second directional coupler signal is measured and the response signal of the respective step or impulse signal is determined in the other direction than the coupler signal, namely the forward direction.

The control and analyzing unit may be configured to determine the signal in forward direction and/or the signal in reverse direction based on the response signal. Thus, the step or impulse signal applied to the probe can be used for determining the properties of the probe in order to determine the respective signal in forward direction and/or the signal in reverse direction.

Furthermore, the invention, according to claim 6, provides a method for testing full duplex multi-level signals between a first transceiver and a second transceiver, with the following steps:

- Determining a first directional coupler signal indicative of a signal in forward direction, wherein the first directional coupler signal is outputted by a first directional coupler, wherein the signal in forward direction corresponds to a signal transmitted by the first transceiver to the second transceiver,
- Determining a second direction coupler signal indicative of a signal in reverse direction, wherein the second directional coupler signal is outputted by a second directional coupler, wherein the signal in reverse direction corresponds to a signal transmitted by the second transceiver to the first transceiver, wherein the first directional coupler is a forward coupler and the second directional coupler is a backward coupler, and wherein the first directional coupler and the second directional coupler are connected with each other in series, thereby establishing a directional coupler unit that comprises the first directional coupler and the second directional coupler, wherein the multi-level signals transmitted between the first transceiver and the second transceiver are separated from each other by means of the directional coupler unit, and
- Determining a signal in forward direction and/or a signal in reverse direction respectively based on the first directional coupler signal and the second directional coupler signal.

Thus, full duplex multi-level signals can be determined and decoded without direct knowledge of the respective signals transmitted. Therefore, the respective signals transmitted from a first transceiver to the second transceiver and vice versa can be analyzed at any stage since the dedicate directional coupler signals are determined which both are used for determining the signal in forward direction, namely the signal from the first transceiver to the second transceiver, and the signal in reverse direction, namely the signal from the second transceiver to the first transceiver.

As both directional coupler signals are determined, the interfering signal portions present in the respective directional couplers can be eliminated. Accordingly, the method relates to a correcting method as the single directional coupler, in particular its output signal, is corrected appropriately while eliminating any interfering influences. Therefore, conventional, namely less expensive and less sophisticated, directional couplers can be used for testing the full duplex multi-level signals ensuring an overall high directivity. Thus, the dedicated signals transmitted from the first transceiver to the second transceiver and vice versa can be determined and decoded appropriately.

According to an aspect, at least one coefficient representative for the relative amplitudes of the signals in forward and reverse directions is used. This coefficient may be estimated, in particular computationally estimated. Alternatively, the coefficient can be tested by a setting and/or configuration testing that is done previously or simultaneously. The quality of the directivity of the directional coupler unit depends on the accuracy (of the estimation) of the coefficient. Thus, determining the coefficient improves the quality of the overall testing.

Moreover, the invention provides a method for setting a probe for testing full duplex multi-level signals between a first transceiver and a second transceiver, with the following steps:

- Applying a step or impulse signal to a probe interface of a probe,

- Measuring a first directional coupler signal indicative of a signal in forward direction or a second directional coupler signal indicative of a signal in reverse direction, and

- Determining a response signal of the probe in the respective opposite direction.

The step or impulse signal applied to the probe can be used for determining the properties of the probe intended for testing purposes. For instance, the respective coefficient required for determining the signals in forward and reverse direction can be determined appropriately.

If the step or impulse signal is applied to the second probe interface, the first directional coupler signal is measured and the response signal of the respective step or impulse signal is determined in the other direction than the coupler signal, namely the reverse direction. If the step or impulse signal is applied to the first probe interface, the second directional coupler signal is measured and the response signal of the respective step or impulse signal is determined in the other direction than the coupler signal, namely the forward direction.

In general, the channel between both transceivers can be described by using impulse response. Particularly, the paths between each of the ports of the directional coupler unit, in particular the ports of each directional coupler, can be described appropriately by using the impulse response. Thus, a time domain description of the probe is provided, in particular of the directional coupler unit. Alternatively, a frequency domain description can be used such that scattering parameters (S-parameters) are obtained for describing the paths between each of the ports.

Moreover, the signal in forward direction or the signal in reverse direction may be determined based on the response signal. Thus, the response signal is used for determining the at least one coefficient appropriately and for determining the signal in forward direction and/or the signal in reverse direction.

The invention will now be described with reference to the enclosed drawings. In the drawings:

- Figure 1 schematically shows a measurement system according to the invention that comprises a probe according to the invention, and

- Figure 2 schematically shows a directional coupler unit of the probe according to the invention.

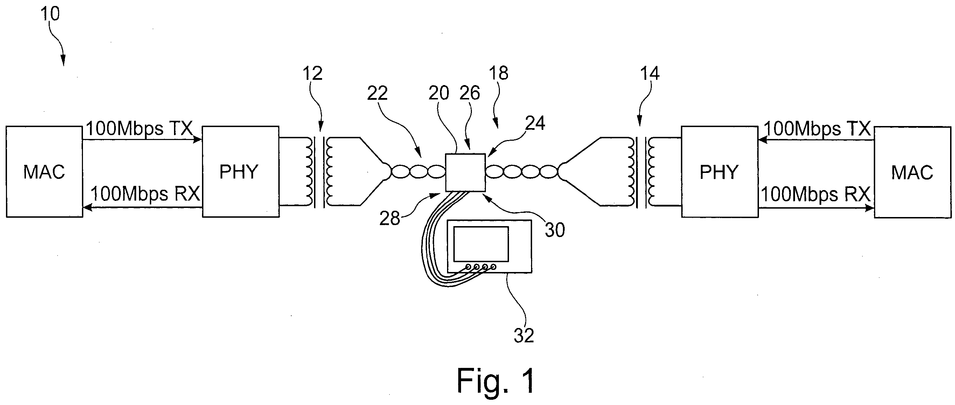

In Figure 1, a measurement system 10 for testing full duplex multi-level signals between a first transceiver 12 and a second transceiver 14 is shown.

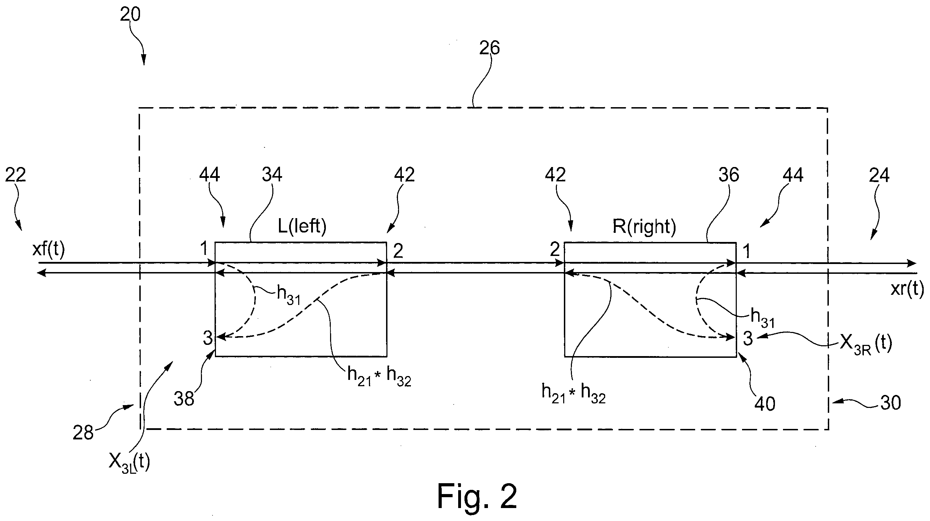

The transceivers 12, 14 are connected with each other via a twisted pair of lines 16 that transmit signals from the first transceiver 12 to the second transceiver 14 and vice versa. These signals are labeled as signals in forward direction $x_f(t)$ (from the first transceiver 12 to the second transceiver 14) as well as signals in reverse direction $x_r(t)$ (from the second transceiver 14 to the first transceiver 12); please refer to Figure 2.

Between both transceivers 12, 14, a channel 18 is established by the twisted pair of lines wherein the channel 18 comprises a signal being a superposition of the signals in forward and reverse direction $x_r(t)$, $x_r(t)$.

Further, the measurement system 10 comprises a probe 20 for testing full duplex multi-level signals, namely the signals in forward direction and the signals in reverse direction simultaneously. The probe 20 comprises a first probe interface 22 that is allocated to the first transceiver 12 and a second probe interface 24 that is allocated to the second transceiver 14. Thus, the probe 20 receives the signals transmitted in both directions via the channel 18.

The probe interfaces 22, 24 are (at least indirectly) connected to the respective transceivers 12, 14 via the line(s) establishing the channel 18.

Moreover, the probe 20 comprises a directional coupler unit 26 that is shown in more detail in Figure 2 as will be described later.

Generally, the directional coupler unit 26 has a finite directivity wherein the direction coupler unit 26 is configured to provide a first directional coupler signal $x_{3L}(t)$ that is indicative of the signals in forward direction $x_f(t)$ (signal from the first transceiver 12 to the second transceiver 14) and a second directional coupler signal $x_{3R}(t)$ being indicative of the signals in reverse direction $x_r(t)$ (signals from the second transceiver 14 to the first transceiver 12).

The probe 20 also has a first output interface 28 and a second output interface 30 that are used to connect the probe 20 with a control and analyzing unit 32 that receives the signals acquired by the probe 20.

In the shown embodiment, the control and analyzing unit 32 is established by an oscilloscope such that the first and second output interfaces 28, 30 correspond to oscilloscope interfaces.

In Figure 2, the directional coupler unit 26 of the probe 20 is shown in more detail. Accordingly, the directional coupler unit 26 comprises a first directional coupler 34 and a second directional coupler 36 which are also labeled as left directional coupler 34 and right directional coupler 36 due to its arrangement.

In the shown embodiment, the first directional coupler 34 is established by a forward coupler whereas the second directional coupler 36 is established by a backward coupler. Thus, the first directional coupler 34 has a first coupled port 38 that is allocated to, in particular establishes, the first output interface 28 whereas the second directional coupler 36 has a second coupled port 40 that is allocated to, in particular establishes, the second output interface 30 of the probe 20.

The directional couplers 34, 36 provide the first and second directional coupler signals $x_{3L}(t)$, $x_{3R}(t)$ respectively that are forwarded to the control and analyzing unit 32. However, the first and second directional coupler signals $x_{3L}(t)$, $x_{3R}(t)$ each comprise signal portions not intended, for instance reflected signal portions inputted at a respective output port 42 of the directional coupler 34, 36.

In general, the (ideal) directional couplers 34, 36 should only comprise signal portions at its first coupled port 38 that correspond to the signals at their respective input port 44. However, the directional coupler signals $x_{3L}(t)$, $x_{3R}(t)$ outputted at the respective coupled port 38, 40 also comprise signal portions inputted by the respective output port 42 of the directional couplers 34, 36 due to their finite directivity.

In Figure 2, the coupled ports 38, 40 are also labeled with a "3" as being the third port of the respective directional coupler 34, 36 whereas the intended input ports are labeled with a "1" and the intended output ports are labeled with a "2" with regard to the intended main direction of the respective directional coupler 34, 36. This notation simplifies the description of the procedure how the directional coupler signals measured are decoded in order to retrieve the signals in forward and backward direction transmitted by the transceivers 12, 14.

Generally, the paths h between each of the ports 38, 40, 42, 44 of the directional couplers 34, 36 can be expressed as follows using a time domain description (impulse response):

$$x_{3L}(t) = h_{31}(t) * x_f(t) + h_{21}(t) * h_{32}(t) * x_r(t),$$

*and*

$$x_{3R}(t) = h_{21}(t) * h_{32}(t) * x_f(t) + h_{31}(t) * x_r(t),$$

wherein $x_f(t)$ corresponds to the signal transmitted by the first transceiver 12 towards the second transceiver 14 and $x_r(t)$ corresponds to the signal transmitted from the second transceiver 14 towards the first transceiver 12. For each path h between the ports 38 - 44 of each directional coupler 34, 36, the impulse response can be described by $h_{xy}(t)$, wherein x is the respective output port and y is the respective input port. Thus, reflected signal portions are also taken into account.

The signal portions of the respective unwanted direction can be treated as interferences that degrade the performance of the respective directional coupler 34, 36. However, the formulas mentioned above can be simplified by renormalizing assuming the impulse responses are ideal and represented by simple scaling factors as follows:

$$x_{3L}(t) = x_f(t) + \alpha * x_r(t),$$

*and*

$$x_{3R}(t) = \alpha * x_f(t) + x_r(t),$$

wherein the coefficient $\alpha$ represents the relative amplitudes of the signals in forward and reverse directions at the dedicated outputs of the directional coupler 34, 36.

As already mentioned, the signals $x_{3L}(t)$ and $x_{3R}(t)$ can be determined easily by the control and analyzing unit 32, for instance the oscilloscope, while measuring the signals at the respective output interfaces 28, 30 connected to the control and analyzing unit 32.

Thus, the signals of interest, namely $x_f(t)$ and $x_r(t)$, can be derived easily by using the following equations:

$$x_f(t) = x_{3L}(t) - \alpha x_{3R}(t),$$

*and*

$$x_r(t) = -\alpha x_{3L}(t) + x_{3R}(t).$$

Accordingly, the signal in forward direction $x_f(t)$ as well as the signal in reverse direction $x_r(t)$ can be calculated by using the probe 20 and the measurement system 10 while determining the first directional coupler signal $x_{3L}(t)$ as well as the second directional coupler signal $x_{3R}(t)$. The coefficient $\alpha$ can be estimated, for instance computationally.

Alternatively, the coefficient $\alpha$ can be tested by applying a step or impulse signal to at least one of the probe interfaces 22, 24 of the probe 20.

Further, the first directional coupler signal $x_{3L}(t)$ indicative of the signal in forward direction $x_f(t)$ or the second directional coupler signal $x_{3R}(t)$ indicative of the signal in reverse direction $x_r(t)$ is measured wherein the directional coupler signal measured depends on the probe interface 22, 24 used for applying the step or impulse signal.

If the step or impulse signal is applied to the second probe interface 24, the first directional coupler signal $x_{3L}(t)$ indicative of the signal forward direction $x_f(t)$ is measured. If the step or impulse signal is applied to the first probe interface 22, the second directional coupler signal $x_{3R}(t)$ indicative of the signal in reverse direction $x_r(t)$ is measured.

In addition, the response signal of the step or impulse signal applied is determined in the respective direction being opposite to the direction of the directional coupler signal $x_r(t)$, $x_f(t)$ measured.

However, applying a predefined step or impulse signal to at least one of the probe interfaces 22, 24 ensures that the properties of the probe 20 can be determined in order to evaluate the coefficient $\alpha$ correctly. This improves the model and the determining process of the signals in forward direction and/or reverse direction $x_r(t)$, $x_f(t)$.

As the probe 20 comprises two probe interfaces 22, 24, the probe 20 can be used as a differential probe.

Accordingly, a probe 20, a measurement system 10 as well as a method for testing full duplex multi-level signals between a first transceiver 12 and a second transceiver 14 are provided that can be used easily and in a very cost-efficient manner as the directional coupler unit 26 is established by two directional couplers 34, 36. The probe 20, in particular the directional coupler unit 26, can be set such that coefficient $\alpha$ describing the properties of the probe 20 can be determined, in particular the properties of the directional coupler unit 26.

**Claims**

1. A probe (20) for testing full duplex multi-level signals between a first transceiver (12) and a second transceiver (14), comprising a first probe interface (22) to be connected to the first transceiver (12) and a second probe interface (24) to be connected to the second transceiver (14), **characterized in that** the probe (20) comprises a directional coupler unit (26) having finite directivity, wherein the directional coupler unit (26) comprises a first directional coupler (34) and a second directional coupler (36), wherein the first directional coupler (34) is a forward coupler and the second directional coupler (36) is a backward coupler, which are connected with each other in series, wherein the first directional coupler (34) has a first coupled port (38) establishing a first output interface (28) and the second directional coupler (36) has a second coupled port (40) establishing a second output interface (30), wherein the directional coupler unit (26) is configured to provide a first directional coupler signal indicative of a signal in forward direction as well as a second directional coupler signal indicative of a signal in reverse direction, wherein the signal in forward direction corresponds to a signal transmitted by the first transceiver (12) to the second transceiver (14), wherein the signal in reverse direction corresponds to a signal transmitted by the second transceiver (14) to the first transceiver (12), wherein the multi-level signals transmitted between the first transceiver (12) and the second transceiver (14) are separated from each other by means of the directional coupler unit (26), and wherein the first directional coupler signal is provided at the first output interface (28) and the second directional coupler signal is provided at the second output interface (30).

2. The probe (20) according to claim 1, wherein the probe (20) is a differential probe.

3. A measurement system (10) for testing full duplex multi-level signals between a first transceiver (12) and a second transceiver (14), comprising a control and analyzing unit (32) and a probe (20) according to any of the preceding claims, wherein the control and analyzing unit (32) is configured to determine the signal in forward direction and/or the signal in reverse direction.

4. The measurement system (10) according to claim 3, wherein the control and analyzing unit (32) is configured to determine the first directional coupler signal and the second directional coupler signal outputted at the respective output interfaces (28, 30) wherein the control and analyzing unit (32) is further configured to determine the signal in forward direction and/or the signal in reverse direction based upon the first and second directional coupler signals determined respectively.

5. The measurement system (10) according to claim 3 or 4, wherein the control and analyzing unit (32) is configured to measure the first directional coupler signal indicative of the signal in forward direction and/or the second directional coupler signal indicative of the signal in reverse direction.

6. A method for testing full duplex multi-level signals between a first transceiver (12) and a second transceiver (14), with the following steps:

   - Determining a first directional coupler signal indicative of a signal in forward direction, wherein the first directional coupler signal is outputted by a first directional coupler (34), wherein the signal in forward direction corresponds to a signal transmitted by the first transceiver (12) to the second transceiver (14),
   - Determining a second direction coupler signal indicative of a signal in reverse direction, wherein the second directional coupler signal is outputted by a second directional coupler (36), wherein the signal in reverse direction corresponds to a signal transmitted by the second transceiver (14) to the first transceiver (12), wherein the first directional coupler (34) is a forward coupler and the second directional coupler (36) is a backward coupler, and wherein the first directional coupler (34) and the second directional coupler (36) are connected with each other in series, thereby establishing a directional coupler unit (26) that comprises the first directional coupler (34) and the second directional coupler (36), wherein the multi-level signals transmitted between the first transceiver (12) and the second transceiver (14) are separated from each other by means of the directional coupler unit (26), and
   - Determining a signal in forward direction and/or a signal in reverse direction respectively based on the first directional coupler signal and the second direction coupler signal.

7. The method according to claim 6, wherein at least one coefficient representative of the relative amplitudes of the signals in forward and reverse directions is used.

**Patentansprüche**

1. Sonde (20) zum Testen von Vollduplex-Mehrstufensignalen zwischen einem ersten Sender-Empfänger (12) und einem zweiten Sender-Empfänger(14), umfassend eine erste Sondenschnittstelle (22), die mit dem ersten Sender-Empfänger (12) zu verbinden ist, und eine zweite Sondenschnittstelle (24), die mit dem zweiten Sender-Empfänger (14) zu verbinden ist, **dadurch gekennzeichnet, dass** die Sonde (20) eine Richtkopplereinheit (26) mit endlicher Richtwirkung umfasst, wobei die Richtkopplereinheit (26) einen ersten Richtkoppler (34) und einen zweiten Richtkoppler (36) umfasst, wobei der erste Richtkoppler (34) ein Vorwärtskoppler ist und der zweite Richtkoppler (36) ein Rückwärtskoppler ist, die miteinander in Reihe verbunden sind, wobei der erste Richtkoppler (34) einen ersten gekoppelten Anschluss (38) aufweist, der eine erste Ausgangsschnittstelle (28) bildet, und der zweite Richtkoppler (36) einen zweiten gekoppelten Anschluss (40) aufweist, der eine zweite Ausgangsschnittstelle (30) bildet, wobei die Richtkopplereinheit (26) konfiguriert ist, um ein erstes Richtkopplersignal, das ein Signal in Vorwärtsrichtung anzeigt, sowie ein zweites Richtkopplersignal, das ein Signal in Rückwärtsrichtung anzeigt, bereitzustellen, wobei das Signal in Vorwärtsrichtung einem Signal entspricht, das von dem ersten Sender-Empfänger (12) zu dem zweiten Sender-Empfänger (14) übertragen wird, wobei das Signal in Rückwärtsrichtung einem Signal entspricht, das von dem zweiten Sender-Empfänger (14) zu dem ersten Sender-Empfänger (12) übertragen wird, wobei die Mehrstufensignale, die zwischen dem ersten Sender-Empfänger (12) und dem zweiten Sender-Empfänger (14) übertragen werden, mittels der Richtkopplereinheit (26) voneinander getrennt werden, und wobei das erste Richtkopplersignal an der ersten Ausgangsschnittstelle (28) bereitgestellt wird und das zweite Richtkopplersignal an der zweiten Ausgangsschnittstelle (30) bereitgestellt wird.

2. Sonde (20) nach Anspruch 1, wobei die Sonde (20) eine Differenzialsonde ist.

3. Messsystem (10) zum Testen von Vollduplex-Mehrstufensignalen zwischen einem ersten Sender-Empfänger (12) und einem zweiten Sender-Empfänger (14), umfassend eine Steuer- und Analyseeinheit (32) und eine Sonde (20) nach einem der vorstehenden Ansprüche, wobei die Steuer- und Analyseeinheit (32) konfiguriert ist, um das Signal in Vorwärtsrichtung und/oder das Signal in Rückwärtsrichtung zu bestimmen.

4. Messsystem (10) nach Anspruch 3, wobei die Steuer- und Analyseeinheit (32) konfiguriert ist, um das erste Richtkopplersignal und das zweite Richtkopplersignal zu bestimmen, die an den jeweiligen Ausgangsschnittstellen (28, 30) ausgegeben werden, wobei die Steuer- und Analyseeinheit (32) ferner konfiguriert ist, um das Signal in Vorwärtsrichtung und/oder das Signal in Rückwärtsrichtung basierend auf dem jeweils bestimmten ersten und zweiten Richtkopplersignal zu bestimmen.

5. Messsystem (10) nach Anspruch 3 oder 4, wobei die Steuer- und Analyseeinheit (32) konfiguriert ist, um das erste Richtkopplersignal, das das Signal in Vorwärtsrichtung anzeigt, und/oder um das zweite Richtkopplersignal, das das Signal in Rückwärtsrichtung anzeigt, zu messen.

6. Verfahren zum Testen von Vollduplex-Mehrstufensignalen zwischen einem ersten Sender-Empfänger (12) und einem zweiten Sender-Empfänger (14), mit den folgenden Schritten:

   - Bestimmen eines ersten Richtkopplersignals, das ein Signal in Vorwärtsrichtung anzeigt, wobei das erste Richtkopplersignal von einem ersten Richtkoppler (34) ausgegeben wird, wobei das Signal in Vorwärtsrichtung einem Signal entspricht, das von dem ersten Sender-Empfänger (12) zu dem zweiten Sender-Empfänger (14) übertragen wird,
   - Bestimmen eines zweiten Richtkopplersignals, das ein Signal in Rückwärtsrichtung anzeigt, wobei das zweite Richtkopplersignal von einem zweiten Richtkoppler (36) ausgegeben wird, wobei das Signal in Rückwärtsrichtung einem Signal entspricht, das von dem zweiten Sender-Empfänger (14) zu dem ersten Sender-Empfänger (12) übertragen wird, wobei der erste Richtkoppler (34) ein Vorwärtskoppler ist und der zweite Richtkoppler (36) ein Rückwärtskoppler ist, und wobei der erste Richtkoppler (34) und der zweite Richtkoppler (36) miteinander in Reihe verbunden sind, wodurch eine Richtkopplereinheit (26) geschaffen wird, die den ersten Richtkoppler (34) und den zweiten Richtkoppler (36) umfasst, wobei die Mehrstufensignale, die zwischen dem ersten Sender-Empfänger (12) und dem zweiten Sender-Empfänger (14) übertragen werden, mittels der Richtkopplereinheit (26) voneinander getrennt werden, und
   - Bestimmen eines Signals in Vorwärtsrichtung und/oder eines Signals in Rückwärtsrichtung jeweils basierend auf dem ersten Richtkopplersignal und dem zweiten Richtkopplersignal.

7. Verfahren nach Anspruch 6, wobei mindestens ein Koeffizient, der für die relativen Amplituden der Signale in Vorwärts- und Rückwärtsrichtungen repräsentativ ist, verwendet wird.

**Revendications**

1. Sonde (20) destiné à tester des signaux multi-niveaux en duplex intégral entre un premier émetteur-récepteur (12) et un second émetteur-récepteur (14), comprenant une première interface de sonde (22) à connecter au premier émetteur-récepteur (12) et une seconde interface de sonde (24) à connecter au second émetteur-récepteur (14), **caractérisée en ce que** la sonde (20) comprend une unité de dispositif de couplage directionnel (26) ayant une directivité finie, dans laquelle l'unité de dispositif de couplage directionnel (26) comprend un premier dispositif de couplage directionnel (34) et un second dispositif de couplage directionnel (36), dans laquelle le premier dispositif de couplage directionnel (34) est un dispositif de couplage avant et le second dispositif de couplage directionnel (36) est un dispositif de couplage arrière, qui sont reliés l'un à l'autre en série, dans laquelle le premier dispositif de couplage directionnel (34) a un premier port couplé (38) établissant une première interface de sortie (28) et le second dispositif de couplage directionnel (36) ayant un second port couplé (40) établissant une seconde interface de sortie (30), dans laquelle l'unité de couplage directionnel (26) est configurée pour fournir un premier signal de couplage directionnel indiquant un signal dans le sens direct ainsi qu'un second signal de couplage directionnel indiquant un signal dans le sens inverse, dans laquelle le signal dans le sens direct correspond à un signal transmis par le second émetteur-récepteur (14) au premier émetteur-récepteur (12), dans laquelle le signal dans le sens inverse correspond à un signal transmis par le second émetteur-récepteur (14) au premier émetteur-récepteur (12), dans laquelle les signaux à plusieurs niveaux transmis entre le premier émetteur-récepteur (12) et le second émetteur-récepteur (14) sont séparés les uns des autres au moyen de l'unité de couplage directionnel (26), et dans laquelle le premier signal de couplage directionnel est fourni à la première interface de sortie (28) et le second signal de couplage directionnel est fourni à la second interface de sortie (30).

2. Sonde (20) selon la revendication 1, dans laquelle la sonde (20) est une sonde différentielle.

3. Système de mesure (10) destiné à tester des signaux multi-niveaux en duplex intégral entre un premier émetteur-récepteur (12) et un second émetteur-récepteur (14), comprenant une unité de commande et d'analyse (32) et une sonde (20) selon l'une quelconque des revendications précédentes, dans lequel l'unité de commande et d'analyse (32) est configurée pour déterminer le signal dans le sens direct et/ou le signal dans le sens inverse.

4. Système de mesure (10) selon la revendication 3, dans lequel l'unité de commande et d'analyse (32) est configurée pour déterminer le premier signal de dispositif de couplage directionnel et le second signal de dispositif de couplage directionnel émis aux interfaces de sortie respectives (28, 30), dans lequel l'unité de commande et d'analyse (32) est en outre configurée pour déterminer le signal dans le sens direct et/ou le signal dans le sens inverse sur la base des premiers et seconds signaux de dispositif de couplage directionnel déterminés respectivement.

5. Système de mesure (10) selon la revendication 3 ou 4, dans lequel l'unité de commande et d'analyse (32) est configurée pour mesurer le premier signal de dispositif de couplage directionnel indiquant le signal dans la direction avant et/ou le second signal de dispositif de couplage directionnel indiquant le signal dans la direction arrière.

6. Procédé d'essai de signaux multi-niveaux en duplex intégral entre un premier émetteur-récepteur (12) et un second émetteur-récepteur (14), comprenant les étapes suivantes :

- La détermination d'un premier signal de dispositif de couplage directionnel indiquant un signal dans la direction avant, le premier signal de dispositif de couplage directionnel étant émis par un premier dispositif de couplage directionnel (34), dans lequel le signal dans la direction avant correspond à un signal transmis par le premier émetteur-récepteur (12) au second émetteur-récepteur (14),
- La détermination d'un second signal de dispositif de couplage directionnel indiquant un signal en sens inverse, dans lequel le second signal de dispositif de couplage directionnel est émis par un second dispositif de couplage directionnel (36), dans lequel le signal en sens inverse correspond à un signal transmis par le second émetteur-récepteur (14) au premier émetteur-récepteur (12), dans lequel le premier dispositif de couplage directionnel (34) est un dispositif de couplage avant et le second dispositif de couplage directionnel (36) est un dispositif de couplage arrière, et dans lequel le premier dispositif de couplage directionnel (34) et le second dispositif de couplage directionnel (36) sont reliés l'un à l'autre en série, établissant ainsi une unité de dispositif de couplage directionnel (26) qui comprend le premier dispositif de couplage directionnel (34) et le second dispositif de couplage directionnel (36), dans lequel les signaux multi-niveaux transmis entre le premier émetteur-récepteur (12) et le second émetteur-récepteur (14) sont séparés l'un de l'autre au moyen de l'unité de dispositif de couplage directionnel (26), et

- La détermination d'un signal dans le sens direct et/ou d'un signal dans le sens inverse, respectivement sur la base du premier signal de dispositif de couplage directionnel et du second signal de dispositif de couplage directionnel.

7. Procédé selon la revendication 6, dans lequel au moins un coefficient représentatif des amplitudes relatives des signaux dans les directions avant et arrière est utilisé.

Fig. 1

Fig. 2

**EP 3 429 098 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5504736 A